# EUROPÄISCHE PATENTSCHRIFT

(11) **EP 2 769 114 B1**
(45) Veröffentlichungstag und Bekanntmachung des Hinweises auf die Patenterteilung: **05.04.2017**
(21) Anmeldenummer: 12768755.6
(22) Anmeldetag: 14.09.2012
(51) Int. Cl.: F16D 65/12

(54) **KRAFTFAHRZEUG - BREMSSCHEIBE**
MOTOR VEHICLE BRAKE DISC
DISQUE DE FREIN DE VÉHICULE AUTOMOBILE

(30) Priorität: 21.10.2011 DE 102011084946
(43) Veröffentlichungstag der Anmeldung: 27.08.2014
(73) Patentinhaber: Bayerische Motoren Werke Aktiengesellschaft, 80809 München (DE)
(72) Erfinder: KOKOTT, Kordian, 80992 Muenchen (DE)
(86) Internationale Anmeldenummer: PCT/EP2012/068130
(87) Internationale Veröffentlichungsnummer: WO 2013/056924

(56) Entgegenhaltungen:
- WO-A1-2005/095816
- DE-A1-102009 017 234
- US-A1- 2008 135 359

## Beschreibung

Die Erfindung betrifft eine Bremsscheibe für ein Kraftfahrzeug, nach dem Oberbegriff des ersten Anspruchs.

Es sind bereits Verbundbremsscheiben bekannt, mit Reibringen aus Grauguss, verbunden mit einem Bremsscheibentopf aus Leichtmetall. Die DE 10 2009 017 234 A1 beschreibt eine solche gebaute Bremsscheibe, bei der Reibring und Topf über seperate Elemente, wie Stifte, Schrauben etc. zusammengefügt sind. Der Bremsscheibentopf weist dabei einen Boden, die Topfscheibe, eine umlaufende Wand, den Topfmantel und einen Rand, den Topfrand auf und ist aus einer Aluminiumlegierung gefertigt. Am Topfrand ist der Reibring mittels in axialer Richtung verlaufenden Befestigungsmitteln, zum Beispiel Schrauben und/oder Nieten, befestigt. Und zwar über vom Reibring-Innendurchmesser nach innen gerichtete Zentrier- und/oder Befestigungsfortsätze des Reibrings, die in axialer Richtung stirnseitig auf Zentrieransätze des Topfrands aufgesetzt und mit den Befestigungsmitteln verbunden werden.

Die US 2008/0135359 A1 beschreibt unter anderem einen gebauten Bremsscheibenrotor aus keramischen Reibscheiben und Lüftungsscheiben, die über eine zentrale Nabe zueinander fixiert werden.

Leichtmetall und Grauguss dehnen sich bei Erwärmung unterschiedlich aus, außerdem werden der Bremsscheibentopf und der Reibring beim Bremsen unterschiedlich erhitzt. Deshalb entstehen in der Bremsscheibe der oben zuerst zitierten Veröffentlichung, je nach Wärmeeintrag in den Reibring durch das Bremsen, über die Verbindung zwischen Bremsscheibentopf und Reibring Spannungen.

Aufgabe der vorliegenden Erfindung ist es, eine Bremsscheibe, vor allem für ein Kraftfahrzeug, bereitzustellen, die eine Verbindung zwischen Bremsscheibentopf und Reibring besitzt, durch die beim Bremsen möglichst wenig Spannungen in der Bremsscheibe aufgebaut werden.

Die Aufgabe wird erfindungsgemäß mit den Merkmalen des Anspruchs 1 gelöst. Weitere Ausgestaltungen der Erfindung ergeben sich aus den Unteransprüchen.

Nach der Erfindung ist eine Bremsscheibe für eine Scheibenbremse, die aus wenigstens einem Bremsscheibentopf und einem daran befestigten Reibring besteht, der mit von seinem Innendurchmesser nach innen gerichteten, insbesondere sechs bis zwölf, Zentrier- und/oder Befestigungsfortsätzen, in axialer Richtung stirnseitig auf Zentrieransätze des Bremsscheibentopfs aufgesetzt, an diesem, mittels in axialer Richtung verlaufenden Befestigungsmitteln, insbesondere Schrauben und/oder Nieten, festgelegt ist, wobei die Zentrieransätze des Bremsscheibentopfs Ausnehmungen im Bremsscheibentopfrand oder im Bremsscheibentopfrand und im Bremsscheibentopfmantel sind, in die jeweils ein Zentrier- und/oder Befestigungsfortsatz des Reibrings hineinragt und mittels der Befestigungsmittel ein Befestigungsring am Bremsscheibentopfrand angebracht ist, der die Ausnehmungen im Bremsscheibentopfrand abdeckt und so die Zentrier- und/oder Befestigungsfortsätze des Reibrings wenigstens in axialer Richtung am Bremsscheibentopf festlegt, dadurch gekennzeichnet, dass die Ausnehmungen im Bremsscheibentopf in axialer Richtung weniger tief sind, insbesondere um 0,1 bis 0,8 mm, als die Tiefe der Zentrier- und/oder Befestigungsfortsätze in axialer Richtung. Dadurch wellt sich der Befestigungsring beim Verbinden mit dem Bremsscheibentopf aufgrund der Tiefendifferenz seiner Auflageflächen, was die Verbindung von Bremscheibentopf und Reibring in axialer Richtung einerseits spielfrei und andererseits aufgrund der Materialelastizitäten nachgiebig gestaltet. Wird der Reibring über seine Zentrier- und/oder Befestigungsfortsätze in Nuten des Bremsscheibentopfs geführt und nicht über Befestigungsmittel direkt mit diesem verbunden, hat das den Vorteil, dass sich Reibring und Bremsscheibentopf bei Erwärmung relativ zueinander in bestimmtem Maße ausdehnen können, ohne dass dadurch größere Materialspannungen aufgrund unterschiedlicher Ausdehnung auftreten. Bremsscheibentopf und Reibring werden vorteilhafterweise aneinander so fixiert, dass Wärmeausdehnungsbewegungen aufgrund unterschiedlicher Werkstoffe durch ausgleichende Eigenschaften der Befestigungseinrichtung noch stattfinden können, ohne zu große Materialspannungen durch die Befestigung zu verursachen. Dazu ist es weiter von Vorteil, wenn die Zentrier- und/oder Befestigungsfortsätze des Reibrings mit den Ausnehmungen im Bremsscheibentopf in Umfangsrichtung eine Spielpassung bilden. Das erleichtert auch das Zusammenfügen von Bremsscheibentopf und Reibring bei der Montage der Bremsscheibe. Wenn dann die Ausnehmungen im Bremsscheibentopf in axialer Richtung weniger tief sind, insbesondere um 0,1 bis 0,8 mm, als die Tiefe derZentrier- und/oder Befestigungsfortsätze in axialer Richtung, wellt sich der Befestigungsring beim Verbinden mit dem Bremsscheibentopf aufgrund der Tieferidifferenz seiner Auflageflächen, was die Verbindung von Bremscheibentopf und Reibring in axialer Richtung einerseits spielfrei und andererseits aufgrund der Materialelastizitäten nachgiebig gestaltet. Besonders einfach bei der Bremsscheibenmontage ist eine Ausführungsform der Erfindung, wenn an den in axialer Richtung außen liegenden Bremsscheibentopfmantelprofilen, außenseitig, auf der einen Seite die Bremsscheibenzentriereinrichtung und/oder die Bremsscheibenbefestigungseinrichtung und auf der anderen Seite die Topfscheibe ausgebildet ist. Das heißt, wenn der Bremsscheibentopf sich, vom Reibring aus gesehen, im wesentlichen in eine Richtung erstreckt. Der Bremsscheibentopfmantel kann dabei als Zylindermantel parallel zur Mittenachse des Bremsscheibentopfes verlaufen oder angeschrägt als Kegelmantel ausgebildet sein.

Wenn dann der einstückige, innengekühlte Reibring der Bremsscheibe aus zwei Reibscheiben mit dazwischen liegenden, diese verbindenden Kühlluftführungen besteht und wenn die Zentrier- und/oder Befestigungsfortsätzen sich an nur einer Reibscheibe befinden, insbesondere an derjenigen, die dem Bremsscheibentopf zugewandt ist, hat das den Vorteil, dass die Kühlung des Reibrings durch den Bremsscheibentopf weniger beeinflusst wird.

Weiterhin kann der Bremsscheibentopfmantel mindestens durch eine, sich in radialer Richtung erstreckende, am vom Reibring entfernteren Ende des Bremsscheibentopfmantels befindliche Topfscheibe versteift werden. Wobei dann der Bremsscheibentopfmantel und/oder die Topfscheibe aus einer Leichtmetalllegierung bestehen und beide vorteilhafterweise zusammen in einem Arbeitsgang gegossen werden können. Das Gewicht wird dadurch enorm reduziert im Vergleich zum Werkstoff Grauguss.

Im Folgenden wird die Erfindung anhand eines Ausführungsbeispiels weiter erläutert. Erfindungswesentlich können sämtliche näher beschriebenen Merkmale sein. Es zeigen:
- Fig. 1:: eine erfindungsgemäße Bremsscheibe in räumlicher Darstellung,
- Fig. 2:: den erfindungsgemäßen Bremsscheibentopf aus Figur 1 mit demontiertem Reibring in räumlicher Darstellung und
- Fig. 3:: den erfindungsgemäßen Reibring aus Figur 1 mit demontiertem Bremsscheibentopf in räumlicher Darstellung.

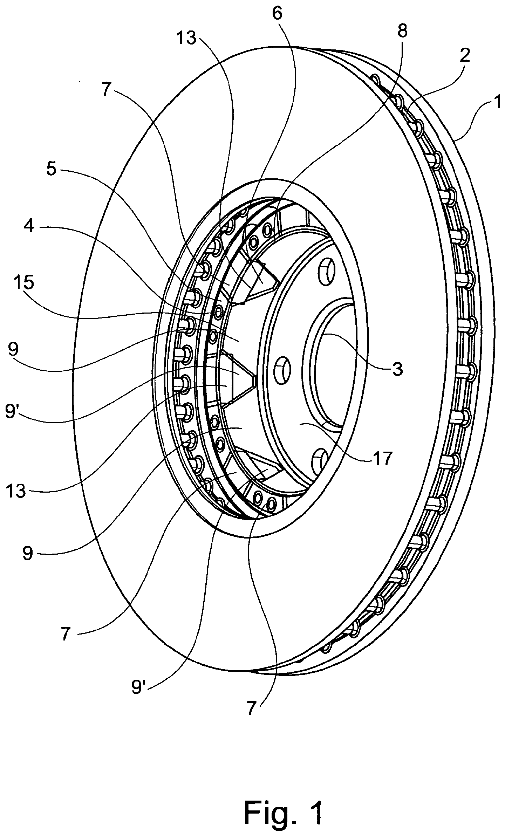

Die in den Figuren 1 bis 3 unterschiedlichen Maßstabes dargestellte Bremsscheibe 1 bzw. Bremsscheibentopf 3 bzw. Reibring 2 sind einer nicht gezeichneten Radnabe, um eine mittig verlaufende nicht gezeichnete Achse zugeordnet. Gleiche Bezugsziffern in den Figuren bezeichnen die gleichen Teile.

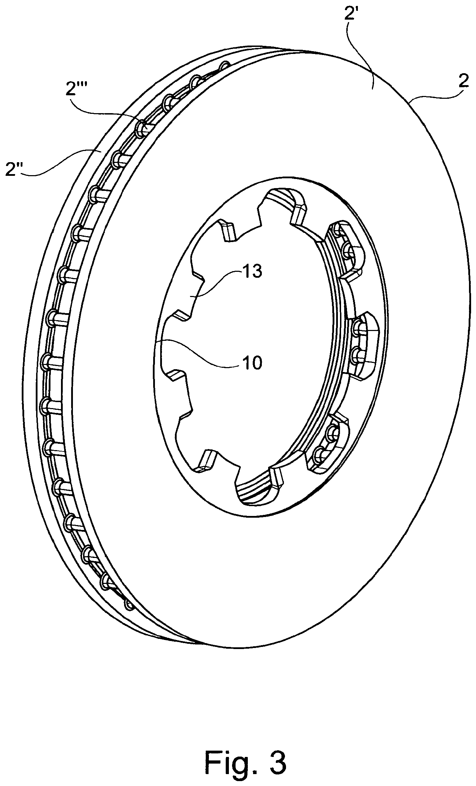

Figur 3 zeigt, dass der einstückige, innengekühlte Reibring 2 aus Grauguß aus zwei Reibscheiben 2', 2" besteht, mit dazwischen liegenden, diese verbindenden Kühlluftführungen 2'" wobei sich Zentrier- und Befestigungsfortsätze 13 des Reibrings 2 an nur einer Reibscheibe 2' befinden und zwar an derjenigen, die nach der Montage dem Bremsscheibentopf 3 aus einer Leichtmetalllegierung zugewandt ist. Dieser erstreckt sich, vom Reibring 2 aus gesehen, im Wesentlichen in eine Richtung (Figur 3).

Die Bremsscheibe 1 für eine Scheibenbremse besteht aus einem Bremsscheibentopf 3 und einem daran befestigten Reibring 2, der mit acht von seinem Innendurchmesser 10 nach innen gerichteten Zentrier- und Befestigungsfortsätzen 13 in axialer Richtung stirnseitig auf Zentrieransätze des Bremsscheibentopfs 3 aufgesetzt ist. Die Zentrieransätze des Bremsscheibentopfs 3 sind als Ausnehmungen 11 im Bremsscheibentopfrand 5 und im Bremsscheibentopfmantel 6 ausgeführt, in die jeweils ein Zentrier- und Befestigungsfortsatz 13 des Reibrings 2 hineinragt. Aufliegend auf den acht Zentrier- und Befestigungsfortsätzen 13 des Reibrings 2, die die Ausnehmungen 11 um 0,5 mm in axialer Richtung am reibringseitigen Ende des Bremsscheibentopfes 3 überragen, ist ein Befestigungsring 7, an den zwischen den Zentrier- und Befestigungsfortsätzen 13 liegenden Kreisringelementen 8 des Bremsscheibentopfrandes 5 mittels in axialer Richtung verlaufenden Nieten 4 befestigt. Der Befestigungsring 7 verläuft über den gesamten Bremsscheibentopfrand 5 und deckt dessen Ausnehmungen 11 mit den Zentrier- und Befestigungsfortsätzen 13 des Reibrings 2 und die dazwischen liegenden Kreisringelemente 8 des Bremsscheibentopfrandes 5 ab. Wenigstens in axialer Richtung werden dadurch Bremsscheibentopf 3 und Reibring 2 aneinander festgelegt, wobei in radialer Richtung eine Art schwimmende Lagerung entsteht, die unterschiedliche radiale Ausdehnungsbewegungen aufgrund einer Erhitzung der Bremsscheibe 1 zulässt, ohne zu große Spannungen zwischen Bremsscheibentopf 3 und Reibring 2 aufzubauen. Dies ist auch dadurch bedingt, dass die Zentrier- und Befestigungsfortsätze 13 des Reibrings 2 mit den Ausnehmungen 11 im Bremsscheibentopf 3 in Umfangsrichtung eine Spielpassung bilden.

Dadurch, dass die Ausnehmungen 11 im Bremsscheibentopf 3 in axialer Richtung 0,5 mm weniger tief sind als die Tiefe der Zentrier- und Befestigungsfortsätze 13 in axialer Richtung, wellt sich der Befestigungsring 7 bei seiner Vernietung mit dem Bremscheibentopfrand 5, was die Befestigungsverbindung in axialer Richtung spielfrei und in geringem Maße nachgiebig macht.

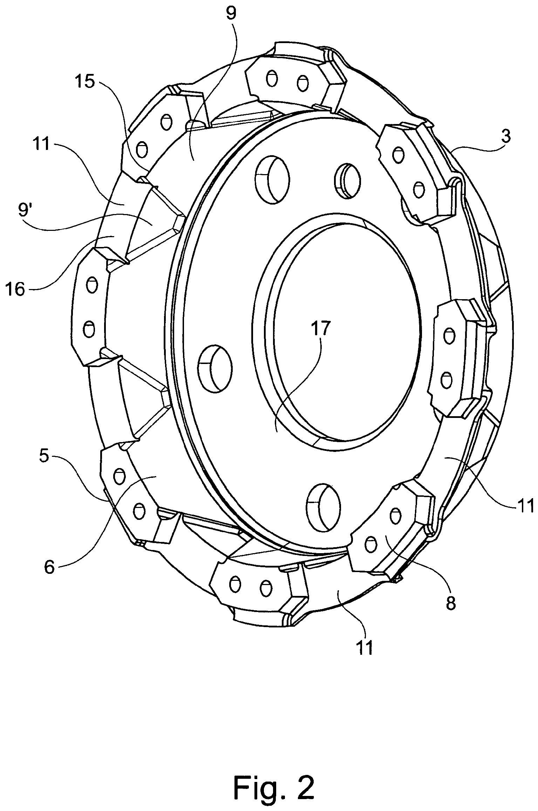

Figur 2 zeigt, dass der Bremsscheibentopf 3 derart gestaltet ist, dass keinerlei Hinterschnitte vorhanden sind und dieser somit einfach durch zwei entsprechende Formhälften gießtechnisch aus Leichtmetall hergestellt werden kann. Der Bremsscheibentopfmantel 6 ist durch eine, sich in radialer Richtung erstreckende, Topfscheibe 17 am vom Reibring 2 entfernteren Ende des Bremsscheibentopfmantels 6 versteift.

Der im Wesentlichen zylindrische Bremsscheibentopfmantel 6 besteht aus in Umfangsrichtung aneinander gereihten, abwechselnd um 180 Winkelgrad verdrehten Segmenten 9, 9' in der Form von gebogenen symmetrischen Trapezen, die mit abwechselnd verschiedenem radialen Abstand zur nicht gezeichneten Mittenlängsachse des Bremsscheibentopfmantels 6 regelmäßig angeordnet sind. Dabei liegen am Bremsscheibentopfrand 5 die kurzen Seiten 15 der symmetrischen Trapeze 9 jeweils bei den Befestigungsmitteln für den Befestigungsring 7, den Nieten 4, und diese symmetrischen Trapeze 9 haben den geringeren Abstand zur Mittenlängsachse des Bremsscheibentopfmantels 6. Die langen Seiten 16 der symmetrischen Trapeze 9'am Bremsscheibentopfrand 5 liegen dagegen jeweils bei den Ausnehmungen 11 im Bremsscheibentopfrand 5 und diese symmetrischen Trapeze 9' haben den größeren Abstand zur Mittenlängsachse des Bremsscheibentopfmantels 6.

Die trapezförmigen Segmente 9, 9' des Bremsscheibentopfmantels 6 stellen Schubfelder dar, die die Gestaltfestigkeit erhöhen, bei gleichzeitiger Gewichtsreduktion durch Materialeinsparung.

## Patentansprüche

1. Bremsscheibe (1), für eine Scheibenbremse, aus wenigstens einem Bremsscheibentopf (3) und einem daran befestigten Reibring (2), der mit von seinem Innendurchmesser (10) nach innen gerichteten, Zentrier- und/oder Befestigungsfortsätzen (13), in axialer Richtung stirnseitig auf Zentrieransätze des Bremsscheibentopfs (3) aufgesetzt, an diesem, mittels in axialer Richtung verlaufenden Befestigungsmitteln (4) festgelegt ist, wobei die Zentrieransätze des Bremsscheibentopfs (3) Ausnehmungen (11) im Bremsscheibentopfrand (5) oder im Bremsscheibentopfrand (5) und im Bremsscheibentopfmantel (6) sind, in die jeweils ein Zentrier- und/oder Befestigungsfortsatz (13) des Reibrings (2) hineinragt und mittels der Befestigungsmittel ein Befestigungsring (7) am Bremsscheibentopfrand (5) angebracht ist, der die Ausnehmungen (11) im Bremsscheibentopfrand (5) abdeckt und so die Zentrier- und/oder Befestigungsfortsätze (13) des Reibrings (2) wenigstens in axialer Richtung am Bremsscheibentopf (3) festlegt, **dadurch gekennzeichnet, dass** die Ausnehmungen (11) im Bremsscheibentopf (3) in axialer Richtung weniger tief sind als die Tiefe der Zentrier- und/oder Befestigungsfortsätze (13) in axialer Richtung, so dass sich der Befestigungsring (7) bei seiner Montage wellt.

2. Bremsscheibe (1) nach Anspruch 1, **dadurch gekennzeichnet, dass** diese sechs bis zwölf Zentrier- und/oder Befestigungsfortsätzen (13) besitzt.

3. Bremsscheibe (1) nach Anspruch 1oder 2, **dadurch gekennzeichnet, dass** die Befestigungsmittel Schrauben und/oder Nieten sind.

4. Bremsscheibe (1) nach einem der Ansprüche 1 bis 3, **dadurch gekennzeichnet, dass** die Ausnehmungen (11) im Bremsscheibentopf (3) in axialer Richtung um 0,1 bis 0,8 mm weniger tief sind als die Tiefe der Zentrier- und/oder Befestigungsfortsätze (13) in axialer Richtung.

5. Bremsscheibe (1) nach einem der Ansprüche 1 bis 4, **dadurch gekennzeichnet, dass** die Zentrier- und/oder Befestigungsfortsätze (13) des Reibrings (2) mit den Ausnehmungen (11) im Bremsscheibentopf (3) in Umfangsrichtung eine Spielpassung bilden.

6. Bremsscheibe (1) nach einem der Ansprüche 1 bis 5, **dadurch gekennzeichnet, dass** der Bremsscheibentopf (3) sich, vom Reibring (2) aus gesehen, im Wesentlichen in eine Richtung erstreckt

7. Bremsscheibe (1) nach einem der Ansprüche 1 bis 6, **dadurch gekennzeichnet, dass** deren einstückiger, innengekühlter Reibring (2) aus zwei Reibscheiben (2',2") mit dazwischen liegenden, diese verbindenden Kühlluftführungen (2"') besteht und dass die Zentrier- und/oder Befestigungsfortsätzen (13) sich an nur einer Reibscheibe (2', 2") befinden, insbesondere an derjenigen, die dem Bremsscheibentopf (3) zugewandt ist.

8. Bremsscheibe (1) nach einem der Ansprüche 1 bis 7, **dadurch gekennzeichnet, dass** das Profil des Bremsscheibentopfmantels (6) durch eine, sich in radialer Richtung erstreckende, Topfscheibe (17), am vom Reibring (2) entfernteren Ende des Bremsscheibentopfmantels (6), versteift ist.

9. Bremsscheibe (1) nach einem der Ansprüche 1 bis 8, **dadurch gekennzeichnet, dass** der Bremsscheibentopf (3) aus einer Leichtmetalllegierung besteht.

## Claims

1. A brake disc (1) for a disc brake, comprising at least one brake disc chamber (3) and a friction ring (2) which is fastened thereon and which, positioned on centring shoulders of the brake disc chamber (3) on the end face in the axial direction with centring and/or attachment extensions (13) directed inwards from its internal diameter (10), is fixed thereon by fastening means (4) running in the axial direction, wherein the centring shoulders of the brake disc chamber (3) are recesses (11) in the edge (5) of the brake disc chamber or in the edge (5) of the brake disc chamber and in the jacket (6) of the brake disc chamber, into which a centring and/or attachment extension (13) of the friction ring (2) respectively projects, and a fastening ring (7) is attached to the edge (5) of the brake disc chamber by the fastening means, which fastening ring covers the recesses (11) in the edge (5) of the brake disc chamber and thus fixes the centring and/or attachment extensions (13) of the friction ring (2) on the brake disc chamber (3) at least in the axial direction, **characterised in that** the recesses (11) in the brake disc chamber (3) are not as deep in the axial direction as the depth of the centring and/or attachment extensions (13) in the axial direction, so that the fastening ring (7) undulates when it is mounted.

2. A brake disc (1) according to claim 1, **characterised in that** it has six to twelve centring and/or attachment extensions (13).

3. A brake disc (1) according to claim 1 or claim 2, **characterised in that** the fastening means are screws and/or rivets.

4. A brake disc (1) according to any of claims 1 to 3, **characterised in that** the recesses (11) in the brake disc chamber (3) are shallower by 0.1 to 0.8 mm in the axial direction than the depth of the centring and/or attachment extensions (13) in the axial direction.

5. A brake disc (1) according to any of claims 1 to 4, **characterised in that** the centring and/or attachment extensions (13) of the friction ring (2) form with the recesses (11) in the brake disc chamber (3) a clearance fit in the circumferential direction.

6. A brake disc (1) according to any of claims 1 to 5, **characterised in that** the brake disc chamber (3) extends in substantially one direction, seen from the friction ring (2).

7. A brake disc (1) according to any of claims 1 to 6, **characterised in that** the integral, inner-cooled friction ring (2) thereof comprises two friction rings (2', 2") with interlying cooling air ducts (2"') which connect them, and **in that** the centring and/or attachment extensions (13) are located on only one friction disc (2', 2"), more especially on the friction disc facing the brake disc chamber (3).

8. A brake disc (1) according to any of claims 1 to 7, **characterised in that** the profile of the brake disc chamber jacket (6) is reinforced by a chamber disc (17) extending in the radial direction, on the end of the brake disc chamber jacket (6), which end is further away from the friction ring (2).

9. A brake disc (1) according to any of claims 1 to 8, **characterised in that** the brake disc chamber (3) comprises a light metal alloy.

## Revendications

1. Disque de frein (1) destiné à un frein à disque constitué d'au moins une cuvette de disque de frein (3) et d'un anneau de friction (2) fixé à celle-ci qui est positionné par des prolongements de centrage et de fixation (13) dirigés vers l'intérieur à partir de son diamètre interne (10), frontalement en direction axiale sur des embouts de centrage de la cuvette de disque de frein (3), et fixé à celle-ci au moyen d'éléments de fixation (4) s'étendant en direction axiale, les embouts de centrage de la cuvette de disque de frein (3) étant des évidements (11) situés au bord (5) de la cuvette de disque de frein ou du bord (5) de la cuvette de disque de frein et de l'enveloppe (6) de la cuvette de disque de frein, dans lesquels pénètrent respectivement un prolongement de centrage et/ou des fixation (13) de l'anneau de friction (2), et, les éléments de fixation permettant de positionner sur le bord (5) de la cuvette de disque de frein, un anneau de fixation (7) qui recouvre les évidements (11) du bord (5) de la cuvette de disque de frein, et ainsi fixant les prolongements de centrage et/ou de fixation (13) de l'anneau de friction (2) au moins en direction axiale sur la cuvette de disque de frein,
**caractérisé en ce que**
les évidements (11) de la cuvette de disque de frein (3) sont moins profonds en direction axiale que la profondeur des prolongements de centrage et/ou de fixation (13) en direction axiale de sorte que l'anneau de fixation (7) puisse onduler lors de son montage.

2. Disque de frein (1) conforme à la revendication 1,
**caractérisé en ce qu'**
il comporte six à douze prolongements de centrage et/ou de fixation (13).

3. Disque de frein (1) conforme à la revendication 1 ou 2,
**caractérisé en ce que**
les éléments de fixation sont des vis et/ ou des rivets.

4. Disque de frein (1) conforme à l'une des revendications 1 à 3,
**caractérisé en ce que**
les évidements (11) de la cuvette de disque de frein (3) sont moins profonds en direction axiale de 0,1 à 0,8 mm que la profondeur des prolongements de centrage et/ou de fixation (13) en direction axiale.

5. Disque de frein (1) conforme à l'une des revendications 1 à 4,
**caractérisé en ce que**
les prolongements de centrage et/ou de fixation (13) de l'anneau de friction (2) permettant d'obtenir un ajustement avec jeu avec les évidements (11) de la cuvette de disque de frein (3) en direction périphérique.

6. Disque de frein (1) conforme à l'une des revendications 1 à 5,
**caractérisé en ce que**
la cuvette de disque de frein (3) s'étend, à partir de l'anneau de friction (2) essentiellement dans une direction.

7. Disque de frein (1) conforme à l'une des revendications 1 à 6,
**caractérisé en ce que**
l'anneau de friction (2), en une seule pièce et à refroidissement interne est constitué par deux disques de friction (2', 2") équipés d'éléments de guidage d'air de refroidissement (2'") qui les relient situés entre eux et les prolongements de centrage et de fixation (13) sont situés uniquement sur l'un des disques de friction (2', 2") en particulier sur le disque de friction qui est tourné vers la cuvette de disque de frein (3).

8. Disque de frein (1) conforme à l'une des revendications 1 à 7,
**caractérisé en ce que**
le profil de l'enveloppe (6) de la cuvette de disque de frein est renforcé par un disque de cuvette (17) s'étendant en direction axiale à l'extrémité de cette enveloppe (6) la plus éloignée de l'anneau de friction (2).

9. Disque de frein (1) conforme à l'une des revendications 1 à 8,
**caractérisé en ce que**
la cuvette de disque de frein (3) est réalisée en un alliage de métal léger.
